# EUROPÄISCHE PATENTANMELDUNG

(11) **EP 0 555 745 A2**
(43) Veröffentlichungstag der Anmeldung: **18.08.1993**
(21) Anmeldenummer: 93101616.6
(22) Anmeldetag: 03.02.1993
(51) Int. Cl.: A01C 7/08, A01C 7/20

(54) **Drillmaschine**

(30) Priorität: 12.02.1992 DE 4204026
(71) Anmelder: Amazonen-Werke H. Dreyer GmbH & Co. KG, D-49205 Hasbergen (DE)
(72) Erfinder: Gattermann, Bernd, W-2872 Hude 1 (DE); Steenken, Bernd, W-4475 Sögel 2 (DE)

(57) **Zusammenfassung**

Drillmaschine mit einem Rahmen, an dem die Scheiben (1) der Einscheibensäschare mittels eines Haltearmes (3) angeordnet sind, wobei die Scheibe (1) jeweils mittels eines eine Achswelle aufweisenden Drehlagers an den Haltearmen (3) drehbar gelagert sind, wobei auf jeder Seite der Scheibe (1) ein Abstreifer (6,16) mittels eines Halters (4,15) angeordnet ist, wobei der Halter (4) des einen Abstreifers (6), der auf der Seite der Scheibe (1), auf der der Haltearm (3) sich befindet, angeordnet ist, an der Halterung (4) des Drehlagers und/oder des Haltearmes befestigt ist. Um die Abstreiferanordnung wesentlich zu verbessern, ist vorgesehen, daß der Halter (15) für den Abstreifer (16), der auf der dem Haltearm (3) abgewandten Seite der Scheibe (1) sich befindet, an der Achswelle (5) befestigt ist.

## Beschreibung

Die Erfindung betrifft eine Drillmaschine gemäß des Oberbegriffes des Patentanspruches 1.

Eine derartige Drillmaschine ist beispielsweise durch den Prospekt Amazone D8 mit Druckvermerk D602*11.90 bekannt. Diese Drillmaschine kann wahlweise mit Normalsäscharen oder Einscheibensäscharen ausgestattet werden. Auf beiden Seiten des Einscheibensäschares sind Abstreifer vorgesehen. Der Abstreifer auf der dem Haltearm zugewandten Seite der Scheibe ist an einem Kalter befestigt, welcher an dem Haltearm angeordnet ist. Der auf der dem Haltearm abgewandten Seite der Scheibe des Einscheibensäschares angeordnete Abstreifer ist mittels eines Halters ebenfalls unmittelbar am Haltearm befestigt. Hierdurch ergibt sich zwischen dem Haltearm und dem Halter bzw. dem Abstreifer ein Zwickel, in welchem sich sehr schnell Boden- und Pflanzenreste festsetzen, so daß das Einscheibensäschar an dieser Stelle in kurzer Zeit zum Verstopfen neigt.

Der Erfindung liegt die Aufgabe zugrunde, die Abstreiferanordnung wesentlich zu verbessern.

Diese Aufgabe wird erfindungsgemäß durch die in Kennzeichen des Anspruches 1 beschriebene Maßnahme gelöst. Infolge dieser Maßnahme ergibt sich ein vollkommen freier Raum zwischen der Außenkante der Säschare und den beiden Abstreifern über den gesamten Umfang der Scheibe.

Hierdurch können sich keine Pflanzenreste zwischen dem Abstreifer und dem Haltearm und Kalter einerseits sowie der Scheibenaußenseite andererseits festsetzen, weil keine über die Außenkante der Scheibe faßende Halterung vorhanden ist.

In bevorzugter Weise sind beide Abstreifer dem rückwärtigen Teil der Scheibe des Einscheibensäschares zugeordnet. Um die Abstreifer entsprechend den jeweiligen Bedingungen exakt einstellen zu können, ist vorgesehen, daß die Abstreifer in Höhen- und Längsrichtung einstellbar an den Haltern angeordnet sind.

Weitere Einzelheiten der Erfindung sind der Beispielsbeschreibung und den Zeichnungen zu entnehmen. Hierbei zeigen
- Fig. 1: das Einscheibensäschar in der Ansicht schräg von hinten oben,
- Fig. 2: die Draufsicht auf das Einscheibensäschar und
- Fig. 3: die Achswelle des Einscheibensäschares in vergrößerter Darstellung in der Draufsicht.

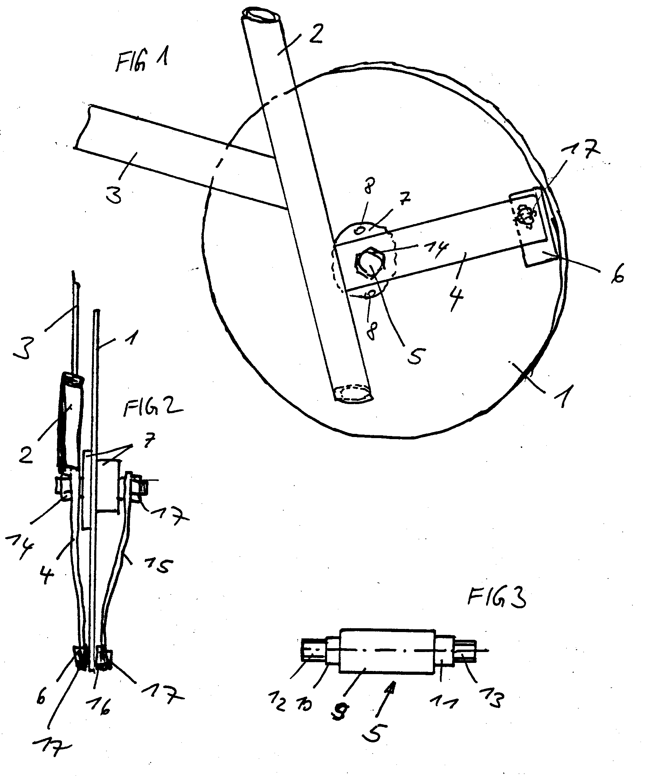

Das in den Fig. 1 und 2 dargestellte Einscheibensäschar weist die Scheibe 1, das Saatgutzuführungsrohr 2 und den Haltearm 3 auf, welcher mittels eines nicht dargestellten Gelenkes am Rahmen der Sämaschine in bekannter Weise in aufrechter Ebene bewegbar angelenkt ist. Der Haltearm 3 ist am Saatgutzuführungsrohr 2 befestigt, welches somit teilweise die Funktion des Haltearmes 3 übernimmt. An dem Saatgutzuführungsrohr 2 ist der Kalter 4 befestigt, welcher die Achswelle 5 und den Abstreifer 6 trägt. Auf der Achswelle 5 ist die Scheibe 1 des Einscheibensäschares mittels der Nabe 7, die mittels geeigneter Befestigungselemente 8, beispielsweise Schraubbolzen oder Niete mit der Scheibe 1 verbunden ist. Die Achswelle 5 weist den mittleren Lagerteil 9 auf, auf den die Nabe 7 aufgeschoben ist. Auf beiden Seiten ist die Achswelle 5 neben dem Lagerteil 9 mit je einem Halterungsansatz 10,11 und je einem Schraubgewindeansatz 12,13 versehen. Der Ansatz 10 faßt in ein sich in dem Halter 4 befindliches Loch und die Achswelle 5 wird mittels der selbstsichernden Mutter 14 an dem Halter 4 festgeschraubt. Die Achswelle 5 ist somit über den Ansatz 10 und den selbstsichernden Mutter 14 am Halter 4 bzw. Haltearm 3 befestigt. Damit die Achswelle 5 sich nicht gegenüber dem Halter 4 verdrehen kann, weist der Ansatz 10 und die Bohrung im Halter 5 ein Mehrkant-, Schlüsselprofil etc. auf.

Auf dem anderen Ansatz 11 wird der Halter 15 für den anderen Abstreifer 16 befestigt. Hierzu wird der Kalter 15 mit seiner Bohrung auf den Ansatz 11 aufgeschoben und mittels der auf dem Schraubgewindeansatz 13 aufgeschraubten selbstsichernden Mutter 17 gesichert. Der Ansatz 11 weist ebenfalls ein Mehrkant-, Schlüsselprofil etc. auf, damit sich der Halter 15 gegenüber der Achswelle 5 und dem anderen Halter 4 nicht verdrehen kann. Am hinteren Ende der beiden Halter sind die beiden Abstreifer 6 und 16 im rückwärtigen Teil der Scheibe 1 des Einscheibensäschares angeordnet. Die Abstreifer 6 und 16 sind mittels der Schrauben 17 in Höhen- und Längsrichtung einstellbar an den Haltern 4 und 15 angeordnet. Auf der Rückseite der Abstreifer 6 und 16 und der Halter 5 und 15 ist keine die Scheibe 1 übergreifende Verbindung zwischen den Abstreifern 6 und 16 bzw. den rückwärtigen Enden der Halter 4 und 15 vorgesehen, so daß sich ein freier Zwischenraum zwischen den Haltern 4 und 15 und den Abstreifern 6 und 16 ergibt. Hierdurch wird sichergestellt, daß sich keine Pflanzen- und Bodenreste an den Abstreifern 6 und 16 und den Haltern 4 und 15 in nachteiliger Weise festsetzen können. Mittels der Abstreifer 6 und 16 werden an der Scheibe 1 anhaftende Boden- oder Pflanzenreste abgestreift, die dann auf die Bodenoberfläche fallen.

## Patentansprüche

1. Drillmaschine mit einem Rahmen, an dem die Scheiben (1) der Einscheibensäschare mittels eines Haltearmes (3) angeordnet sind, wobei die Scheibe (1) jeweils mittels eines eine Achswelle (5) aufweisenden Drehlagers an den Haltearmen (3) drehbar gelagert sind, wobei auf jeder Seite der Scheibe (1) ein Abstreifer (6,16) mittels eines Halters (4,15) angeordnet ist, wobei der Halter (4) des einen Abstreifers (6), der auf der Seite der Scheibe (1), auf der der Haltearm (3) sich befindet, angeordnet ist, an der Halterung (4) des Drehlagers und/oder des Haltearmes befestigt ist, dadurch gekennzeichnet, daß der Halter (15) für den Abstreifer (16), der auf der dem Haltearm (3) abgewandten Seite der Scheibe (1) sich befindet, an der Achswelle (5) befestigt ist.

2. Drillmaschine nach Anspruch 1, dadurch gekennzeichnet, daß beide Abstreifer (6,16) dem rückwärtigen Teil der Scheibe (1) des Einscheibensäschares zugeordnet sind.

3. Drillmaschine nach Anspruch 1, dadurch gekennzeichnet, daß die Abstreifer (6,16) in Höhen- und Längsrichtung einstellbar an den Haltern (4,15) angeordnet sind.
